# EUROPÄISCHE PATENTSCHRIFT

(11) **EP 2 780 736 B1**
(45) Veröffentlichungstag und Bekanntmachung des Hinweises auf die Patenterteilung: **13.07.2016**
(21) Anmeldenummer: 12772286.6
(22) Anmeldetag: 04.10.2012
(51) Int. Cl.: G01S 15/02, G01S 15/93

(54) **VERFAHREN UND FAHRERASSISTENZSYSTEM ZUR ERFASSUNG EINER FAHRZEUGUMGEBUNG**
METHOD AND DRIVER ASSISTANCE SYSTEM FOR THE DETECTION OF A VEHICLE ENVIRONMENT
PROCÉDÉ ET SYSTÈME D'ASSISTANCE DU CONDUCTEUR SERVANT À APPRÉHENDER L'ENVIRONNEMENT D'UN VÉHICULE

(30) Priorität: 15.11.2011 DE 102011086402
(43) Veröffentlichungstag der Anmeldung: 24.09.2014
(73) Patentinhaber: Robert Bosch GmbH, 70442 Stuttgart (DE)
(72) Erfinder: LEHNER, Philipp, 74372 Sersheim (DE); SCHUMANN, Michael, 70597 Stuttgart (DE); NIEMZ, Volker, 71277 Rutesheim (DE); KANTER, Pascal, 71272 Renningen (DE)
(86) Internationale Anmeldenummer: PCT/EP2012/069576
(87) Internationale Veröffentlichungsnummer: WO 2013/072132

(56) Entgegenhaltungen:
- DE-A1-102006 035 207

## Beschreibung

### Stand der Technik

Die Erfindung betrifft ein Verfahren und ein Fahrerassistenzsystem zur Erfassung einer Fahrzeugumgebung.

Es besteht ein großes Interesse daran, Unfälle beim Rücksetzen des Fahrzeugs, etwa durch Überfahren eines Fußgängers oder Fahrradfahrers oder auch durch eine Kollision mit einem ortsfesten Gegenstand zu vermeiden. Zur Vermeidung derartiger Unfälle sind in vielen Fahrzeugen rückwärtig Sensoren zur Detektion von Hindernissen verbaut. Diese Sensoren sind zumeist Ultraschallsensoren, aber auch zunehmend optische Sensoren, d. h. insbesondere Monookular- oder Stereokameras. In jüngeren Systemen werden die Daten des optischen Sensorsystems und des Ultraschallsensorsystems zusammengeführt und auf einer gemeinsamen Ausgabeeinheit angezeigt.

DE 10 2009 000 401 A1 beschreibt eine derartige Vorrichtung, um eine Kollision zwischen einem Fahrzeug und einem Objekt zu vermeiden, wobei ein Ultraschallsystem eine erste Objektinformation erfasst und eine Videokamera eine zweite Objektinformation des Objekts erfasst. Die beiden Objektinformationen werden zur Erhöhung der Objektplausibilisierung miteinander korreliert.

DE 10 2004 050 626 A1 beschreibt eine Einrichtung zur Überwachung einer Umgebung eines Kraftfahrzeugs mit einer Ultraschallsensorik und einer Kamerasensorik, wobei nach einer Detektion eines Objekts durch die Ultraschallsensorik eine Umschaltung der Anzeige des Bildes der Kamerasensorik auf den interessanten Bereich erfolgt. In einer bildlichen Darstellung der Fahrzeugumgebung auf der Anzeige wird das durch das Ultraschallsystem detektierte Objekt besonders hervorgehoben.

DE10 2006 035 207 A1 zeigt ein Verfahren zum Erfassen einer Fahrzeugumgebung, wobei eine Kameraeinrichtung eine Umgebung des Fahrzeugs erfasst und die Umgebung auf verkehrsrelevante Objekte untersucht. Zur Genauigkeit der Positionsbestimmung von verkehrsrelevanten Objekten und der Vermeidung der Erfassung von Fehlobjekten ist die Kamera zum Zusammenwirken mit einer Lasereinrichtung oder einer Radareinrichtung und einer zugehörigen Auswerteeinrichtung ausgebildet. Die Kameraeinrichtung bestimmt eine Näherung für den Abstand und den Winkel, in welchem das verkehrsrelevante Objekt sich befindet und ermittelt daraufhin einen Bereich, in welchem sich das verkehrsrelevante Objekt ungefähr befindet. Die diesen Bereich definierenden Grenzwerte werden an die Lasereinrichtung bzw. Radareinrichtung weitergegeben, woraufhin die Lasereinrichtung den Bereich zwischen den Grenzwerten abrastert und die genaue Position des Objekts bestimmt.

Nachteilig an den im Stand der Technik bekannten Vorrichtungen ist, dass es mitunter sehr lange dauern kann, bis ein Objekt hinreichend präzise erkannt ist und ein Warnsignal an den Fahrer gegeben wird oder ein automatischer Eingriff des Systems in die Fahrzeugsteuerung erfolgt.

Es ist eine Aufgabe der Erfindung, ein Verfahren und ein Fahrerassistenzsystem zu schaffen, welche erlauben, ausreichend plausible Informationen über ein Objekt in der Fahrzeugumgebung in kurzer Zeit zu gewinnen.

### Offenbarung der Erfindung

Die Aufgabe wird gelöst durch ein Verfahren mit den Merkmalen nach dem Anspruch 1 und durch ein Fahrerassistenzsystem mit den Merkmalen nach dem Anspruch 10. Vorteilhafte Weiterbildungen der Erfindung sind in den abhängigen Ansprüchen definiert.

Demnach ist vorgesehen, dass beim Erfassen einer Fahrzeugumgebung ein Sensor eine Umgebung des Fahrzeugs erfasst, in der erfassten Umgebung ein Objekt erkannt wird und aufgrund des erkannten Objekts ein Ultraschallsystem angesteuert wird, um das erkannte Objekt zu erfassen.

### Vorteile der Erfindung

Ein erfindungsgemäßes Ultraschallsystem kann eine Gruppe von Ultraschallsensoren umfassen, welche gemeinsam eine Teilumgebung des Fahrzeugs erfassen, beispielsweise können die Ultraschallsensoren im Heckbereich zur Erfassung einer rückwärtigen Umgebung und/oder die Ultraschallsensoren im Frontbereich zur Erfassung einer vorderseitigen Umgebung und/oder die Ultraschallsensoren im Seitenbereich des Fahrzeugs zur Erfassung des Seitenbereichs des Fahrzeugs einem Ultraschallsystem zugeordnet sein. Das Ultraschallsystem kann darüber hinaus auch eine der jeweiligen Gruppe zugeordnete Steuereinrichtung und eine Signalverarbeitungseinrichtung umfassen.

In einer bevorzugten Ausführungsform wird ausgehend von Daten über das erkannte Objekt dem Ultraschallsystem ein Bereich erhöhten Interesses, d. h. eine "Region of Interest" übergeben. Daraufhin steuert das Ultraschallsystem Sensoren in dem Bereich erhöhten Interesses aktiv an. Das kann insbesondere dadurch erfolgen, dass ein Ultraschallsensor, welcher dem erkannten Objekt am nächsten gelegen ist, dauerhaft sendet und die anderen Ultraschallsensoren dauerhaft empfangen, d.h. dessen reflektierte Signale detektieren. Alternativ können auch mehrere Ultraschallsensoren in dem Bereich erhöhten Interesses aktiviert werden, beispielsweise zwei oder drei Ultraschallsensoren im Wechsel, welche dem erkannten Objekt am nächsten gelegen sind. Bevorzugt werden diejenigen Ultraschallsensoren aktiviert, welche aufgrund ihrer lateralen Position am Fahrzeug am ehesten brauchbare Ergebnisse vermuten lassen. Der Bereich erhöhten Interesses kann durch einen oder mehrere Parameter gekennzeichnet und insbesondere als ein Winkelbereich definiert sein, d.h. durch eine Vorzugsrichtung, in welcher zu scannen ist. Es können ein oder mehrere Bereiche erhöhten Interesses übergeben werden, worauf hin diese sequenziell nacheinander und/oder in einer durch eine Prioritätsverteilung bestimmte Reihenfolge nacheinander gescannt werden können.

In einer bevorzugten Ausführungsform der Erfindung führt das Ultraschallsystem abwechselnd eine vollständige Umgebungserfassung durch die Ultraschallsensoren und eine Erfassung des oder der Bereiche erhöhten Interesses aus. Mit vollständiger Umgebungserfassung ist gemeint, dass eine Gruppe von Ultraschallsensoren, welche eine Teilumgebung des Fahrzeugs erfassen, die ihnen zugeordnete Teilumgebung vollständig erfassen. Dieser Vorgang kann auch als ein vollständiger Scan bezeichnet sein. Bei einer vollständigen Umgebungserfassung können die beteiligten Ultraschallsensoren beispielsweise seriell nacheinander durchgeschaltet werden.

Eine Ausführung im ständigen Wechsel kann bedeuten, dass eine vollständige Erfassung eines Teilbereichs der Umgebung über ein erstes definiertes Zeitintervall ausgeführt wird und danach eine Erfassung des oder der Bereiche erhöhten Interesses über ein zweites definiertes Zeitintervall ausgeführt wird, woraufhin wiederum die vollständige Erfassung des Teilbereichs der Umgebung über das erste definierte Zeitintervall ausgeführt wird, usw. Die beiden Zeitintervalle können insbesondere unmittelbar aneinander anschließen, so dass das Ultraschallsystem die Scans nacheinander abwechselt. Die Dauer eines Scans des Teilbereichs der Umgebung kann beispielsweise 60 ms bis 240 ms sein, insbesondere 60 ms bis 120 ms und die Dauer eines Scans des oder der Bereiche erhöhten Interesses kann 5 ms bis 30 ms, insbesondere 6 ms bis 10 ms sein.

In einer Ausführungsform der Erfindung unterbricht das Ultraschallsystem die vollständige Umgebungserfassung, d.h. die Erfassung der Teilumgebung des Fahrzeugs, um einen oder mehrere Bereiche erhöhten Interesses zu erfassen, wenn ein Objekt auf den Bildern des Videosystems erkannt wurde. Während der Unterbrechung wird eine Erfassung des Bereichs erhöhten Interesses durchgeführt. Eine Unterbrechung des Sende-Empfangszyklus des vollständigen Umgebungsscans kann wenige Millisekunden dauern, und insbesondere kürzer als die Sende-Empfangszyklusdauer des vollständigen Umgebungsscans sein, beispielsweise 5 ms bis 30 ms, insbesondere 6 ms bis 10 ms lang. Danach kann wiederum ein vollständiger Umgebungsscan ausgeführt werden. Hierdurch wird der Betrieb weiterer Fahrerassistenzsysteme nicht gestört, welche Informationen des Ultraschallsystems über die vollständige Umgebung benötigen.

In einer Ausführungsform der Erfindung ist bei einer Erfassung des Bereichs erhöhten Interesses eine Update-Rate des Ultraschallsystems höher als bei einer vollständigen Umgebungserfassung. Die Update-Rate kann beispielsweise zweifach, dreifach, vierfach oder fünffach gegenüber einer normalen Update-Rate des Ultraschallsystems erhöht sein. Dies hat den Vorteil, dass ein erkanntes und eventuell als kritisch eingestuftes Objekt mit erhöhter Aufmerksamkeit verfolgt und seine etwaige Bewegung und sein Abstand zu dem Fahrzeug genauer erfasst werden kann.

Erfindungsgemäß findet eine stärkere Überwachung des Bereichs statt, in dem sich ein Objekt befindet, welches in einem Bild des Videosystems detektiert wurde. Bevorzugt wird das erkannte Objekt klassifiziert und dem Ultraschallsystem ein Klassifikationsparameter übergeben. Dabei ist insbesondere eine hohe Kritikalitätsklasse vorgesehen, welche z. B. Fußgänger, Fahrzeuge oder weitere bewegliche Objekte umfasst, und eine niedrige Kritikalitätsklasse, welche feststehende Hindernisse umfasst. Entsprechend der detektierten Klasse kann eine Reaktion des Ultraschallsystems vorgesehen sein. Je nach Objektvorkommnissen können Bereiche höchsten Interesses vorgesehen sein, Bereiche hohen Interesses und Bereiche niedrigen Interesses. Ein Objekt, welches sich beispielsweise in einer Klasse einer hohen Kritikalität befindet, kann einen Bereich höchsten Interesses definieren. Ein Objekt, welches sich in einer Klasse niedriger Kritikalität befindet, kann beispielsweise einen Bereich hohen Interesses definieren. Bereiche, in welchen keine Objekte detektiert wurden, können als Bereiche niedrigen Interesses gekennzeichnet sein. Das Ultraschallsystem kann daraufhin die Bereiche erhöhten, d. h. hohen oder höchsten Interesses verstärkt erfassen, um die darin detektierten Objekte zu überwachen. Dabei kann vorgesehen sein, dass bei der Erfassung von Bereichen höchsten Interesses eine Update-Rate des Ultraschallsystems höher ist als bei der Erfassung von Bereichen hohen Interesses. Bereiche hohen Interesses können indes eine höhere Update-Rate aufweisen als Bereiche niedrigen Interesses.

In einer Ausführungsform wird die Umgebung durch ein Ultraschallsystem mit Ultraschallsensoren erfasst und ausgehend von den erfassten und ausgewerteten Daten wird das Ultraschallsystem gezielt angesteuert. Das Ultraschallsystem nutzt, d.h. verwendet die Daten von durch das Ultraschallsystem im kompletten Scan, d.h. im gewöhnlichen Betrieb erkannten Objekten, um bestimmte Bereiche der Fahrzeugumgebung besonders genau zu erfassen. Hierdurch kann mit größerer Sicherheit festgestellt werden, ob sich ein kritisches Objekt in der näheren Umgebung des Fahrzeugs befindet und wie es sich bewegt. Beispielsweise können schwach reflektierende Objekte, die sich durch ein Flackern in der Detektion zeigen, durch das Aussetzen des kompletten Scans und durch die Fokussierung sehr gut erfasst und hiernach beispielsweise zur Anzeige gebracht werden. Das Gleiche gilt für bewegte Objekte.

Bevorzugt ist der Sensor ein optischer Sensor, bevorzugt als ein Teil eines Videosystems ausgebildet, welcher ein Bild einer Umgebung des Fahrzeugs erfasst. Der Vorteil liegt darin, dass nicht nur eine Datenfusion mit den Bildern des Videosensors und des Ultraschallsystems zur Objektplausibilisierung betrieben wird, sondern dass aufgrund der aus dem Videobild gewonnenen Daten das Ultraschallsystem gezielt angesteuert wird. Mit anderen Worten steuert das Videosystem die Aufmerksamkeit des Ultraschallsystems, so dass sich die Sensoriken ergänzen. Das Ultraschallsystem nutzt, d.h. verwendet die Daten von im Videosystem erkannten Objekten, um bestimmte Bereiche der Fahrzeugumgebung besonders genau zu erfassen. Hierdurch kann mit größerer Sicherheit festgestellt werden, ob sich ein kritisches Objekt in der näheren Umgebung des Fahrzeugs befindet und wie es sich bewegt.

Nach einer bevorzugten Ausführungsform der Erfindung ist die erfasste Umgebung des Sensors, beispielsweise ein Bild eines Videosensors lateral in Bereiche segmentiert, welche einem und/oder mehreren Ultraschallsensoren zugeordnet sind. Ein Objekt, welches in der Umgebung, beispielsweise auf dem Videobild, erkannt wird, kann einem oder mehreren Segmenten zugeordnet werden und somit einem und/oder mehreren Ultraschallsensoren zugeordnet werden. Die laterale Segmentierung kann im einfachsten Falle durch eine Zuordnung von Bildpixeln erfolgen. Dabei kann vorgesehen sein, dass eine Anzahl der Segmente der Umgebung, beispielsweise eine Anzahl von Bildbereichen mit der Anzahl der Ultraschallsensoren übereinstimmt oder größer ist oder kleiner ist. Auf Pixelbasis kann die Segmentierung der Umgebung, bzw. des Videobildes äquidistant verteilt sein, d.h. die Bereiche gleich breit sein oder die Segmentierung der Umgebung, bzw. des Videobildes kann äquidistant verteilt sein, d.h. die einzelnen Bereiche können unterschiedlich breit sein. Die Definition der Regionen, d. h. der lateralen Segmente, kann auch einer äquidistanten Winkelunterteilung des Kameraerfassungsbereichs folgen. Die durch die Technik der Bilderfassungssensoren hervorgerufenen optischen Verzerrungen werden bevorzugt bereits vom Bilderkennungsverfahren korrigiert und die lateralen Segmente entsprechend realitätsnah definiert.

In einer Ausführungsform der Erfindung wird festgestellt, ob das erkannte Objekt sich bewegt und das Ultraschallsystem der Bewegung des Objekts nachfolgend angesteuert. In dem Fall selbstbeweglicher Objekte kann also dem Ultraschallsystem übermittelt werden, dass das Objekt selbstbeweglich ist und eine Bewegung des Objekts kann durch die Ultraschallsensoren nachgeführt werden. Dabei kann die Detektion seitlicher Bewegung durch Methoden des optischen Flusses geschehen, wobei selbstbewegliche Objekte als Diskontinuitäten des optischen Flusses erkannt werden können, woraufhin auf das Ultraschallsystem derart eingewirkt wird, dass diese verstärkt erfasst werden, um eine schnelle und hohe Objektplausibilisierung zu erreichen und um die Entfernung zu ihnen zu bestimmen.

Das Verfahren wird vorzugsweise im Rahmen einer Backover-Avoidance, d. h. einer Vermeidung von Überfahren im Rückwärtsgang, eingesetzt und/oder als Teil einer Parkassistenzeinrichtung. Die durch das Ultraschall- und das Videosystem gewonnenen Informationen über die Fahrzeugumgebung können darüber hinaus im Rahmen von herkömmlichen Datenfusionsmodulen an den Fahrer ausgegeben werden, z. B. als 3D-Bild der Umgebung aus einer Topview oder Ähnliches.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei der Computereinrichtung kann es sich beispielsweise um ein Modul zur Implementierung eines Fahrerassistenzsystems oder eines Subsystems hiervon in einem Fahrzeug handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung wie etwa einem Server zum Herunterladen bereitgestellt werden, z. B. ein Datennetzwerk wie etwa das Internet oder eine Kommunikationsverbindung wie etwa eine Telefonleitung oder eine drahtlose Verbindung.

Erfindungsgemäß ist außerdem ein Fahrerassistenzsystem zur Ausführung eines der beschriebenen Verfahren vorgesehen, aufweisend
- einen Sensor zur Aufnahme einer Fahrzeugumgebung,
- eine Komponente zur Erkennung von Objekten in der von dem Sensor erfassten Umgebung,
- ein Ultraschallsystem zur Erfassung einer Umgebung eines Fahrzeugs und
- eine Komponente zur Ansteuerung des Ultraschallsystems abhängig von Daten der Komponente zur Erkennung von Objekten in der von dem Sensor erfassten Umgebung.

Der Sensor kann ein optischer Sensor eines Videosystems oder ein Ultraschallsensor eines Ultraschallsystems sein.

Die Komponente zur Erkennung von Objekten auf Bildern des optischen Sensors verwendet beispielsweise Bildinformationen wie optische Kontraste oder aus Bildfolgen oder von steroskopischen Kameras gewonnene 3D-Information.

Das Fahrerassistenzsystem kann eine Fusionskomponente aufweisen, welche die Daten des optischen Sensors mit den Daten des Ultraschallsensors kombiniert und weiterverarbeitet, etwa an eine Anzeige oder einem Kollisionsüberwachungssystem übermittelt.

Weitere Ausführungsbeispiele und Vorteile der Erfindung werden nachfolgend mit Bezug auf die Zeichnungen beschrieben.

### Kurze Beschreibung der Zeichnungen

Es zeigen
- Fig. 1: eine Draufsicht auf einen Teil eines Fahrzeugs und einer Fahrzeugumgebung und
- Fig. 2: eine schematische Darstellung funktionaler Komponenten einer Datenverarbeitungsanlage in einem Fahrzeug und
- Fig. 3: ein Bilds eines optischen Sensors.

### Ausführungsformen der Erfindung

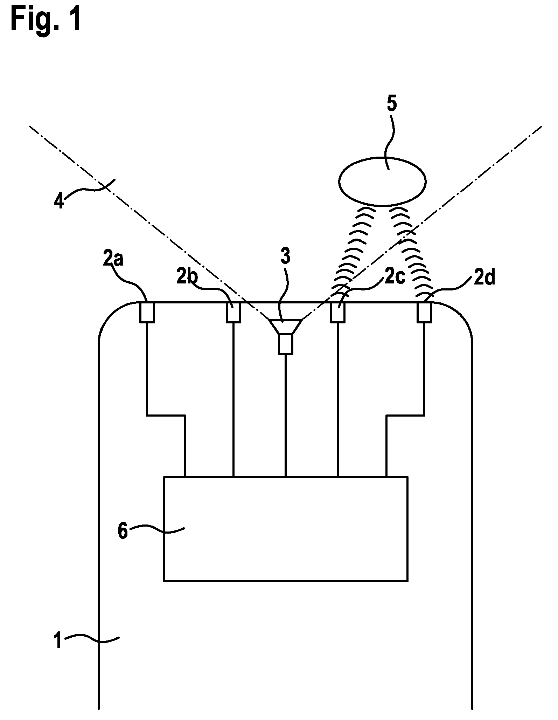

Fig. 1 zeigt schematisch ein Fahrzeug 1 in Draufsicht, welches ein Ultraschallsystem mit hier beispielhaft vier Ultraschallsensoren 2a, 2b, 2c, 2d und ein optisches Sensorsystem mit hier beispielhaft einer Kamera 3 aufweist. Der Erfassungsbereich 4 der Kamera 3 ist als Lichtkegel in gestrichelten Linien dargestellt. Im Erfassungsbereich 4 der Kamera 3 befindet sich ein Objekt 5, das auf dem Videosignal der Kamera 3 sichtbar ist. Das Objekt 5 wird auch durch die Ultraschallsensoren 2a, 2b, 2c, 2d detektiert, wobei die Reflexsignale der beiden rechten Ultraschallsensoren 2c, 2d am stärksten ausgeprägt sind, da sich das Hindernis, d.h. das Objekt am nächsten zu diesen Ultraschallsensoren 2c, 2d befindet.

Die in Fig. 1 dargestellte Situation kann eine Situation sein, in welcher das Fahrzeug 1 aktiv zurücksetzt, d. h. die Kamera 3 ist eine Rückkamera und die Ultraschallsensoren 2a, 2b, 2c, 2d sind Rückultraschallsensoren. Alternativ dazu kann die in Fig. 1 dargestellte Sensorik frontseitig des Fahrzeugs 1 ausgebildet sein, um Objekte, die sich vor dem Fahrzeug befinden, schnell und sicher zu lokalisieren. Auch eine Implementierung der Erfindung auf der Seite des Fahrzeugs, beispielsweise mithilfe von SVA-Kameras und/oder SVS-Kameras und/oder BSD-Kameras ist denkbar.

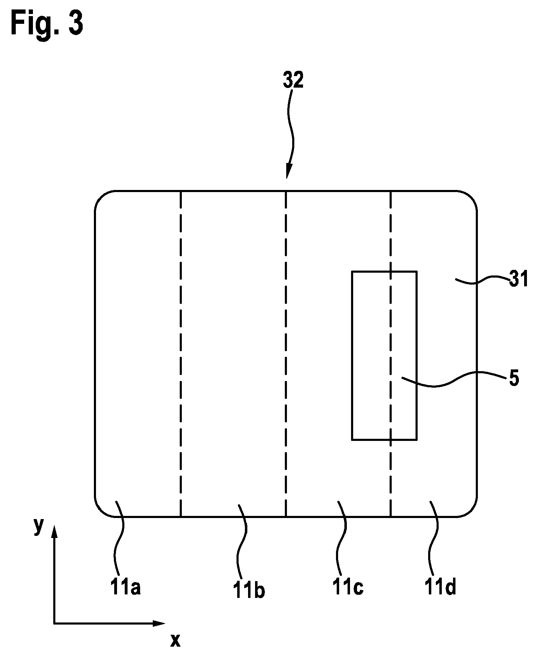

Das Signal der Kamera 3 wird einer Datenverarbeitungseinrichtung 6 zugeführt, welches ein Teil eines Fahrerassistenzsystems des Fahrzeugs 1 ist. Die Signale der Ultraschallsensoren 2a, 2b, 2c, 2d werden ebenfalls der Datenverarbeitungseinrichtung 6 zugeführt. Die Datenverarbeitungseinrichtung 6 umfasst Berechnungsmodule, welche mit Bezug auf Figur 3 beschrieben werden. Erfindungsgemäß ist die Datenverarbeitungseinrichtung 6 ausgebildet, um die Ultraschallsensoren 2a, 2b, 2c, 2d anzusteuern, so dass verschiedene Messmodi möglich sind. Insbesondere kann eine serielle Hintereinanderansteuerung der einzelnen Ultraschallsensoren 2a, 2b, 2c, 2d im gewöhnlichen Betrieb erfolgen, wodurch ein Scan der vollständigen Teilumgebung des Fahrzeugs 1 durchgeführt wird. Wenn das Objekt 5 durch ein Modul der Datenverarbeitungseinrichtung 6 erkannt wird, dann werden gezielt Ultraschallsensoren angesteuert, um das Objekt 5 genauer zu lokalisieren. Im dargestellten Beispiel in Fig. 1 werden nach Auswertung des Videosignals der Kamera 3 die rechtsseitigen Ultraschallsensoren 2c, 2d beispielsweise im Wechsel angesteuert oder nur der Sensor halbrechts 2c oder nur der Sensor rechts 2d. Hierbei kann, gegebenenfalls abhängig von einer Kritikalitätsklasse, welche dem Objekt von einem Modul der Datenverarbeitungseinrichtung 6 zugeordnet wurde, mit einer erhöhten Update-Rate überwacht werden. Der gewöhnliche Messmodus des vollständigen Umgebungsscans kann für die Überwachung kurzzeitig unterbrochen werden. Gemäß einer alternativen Ausführungsform können sich die Messmodi Umgebungsscan und Scan des oder der Bereiche erhöhten Interesses in gleichen oder unterschiedlich langen Dauern abwechseln.

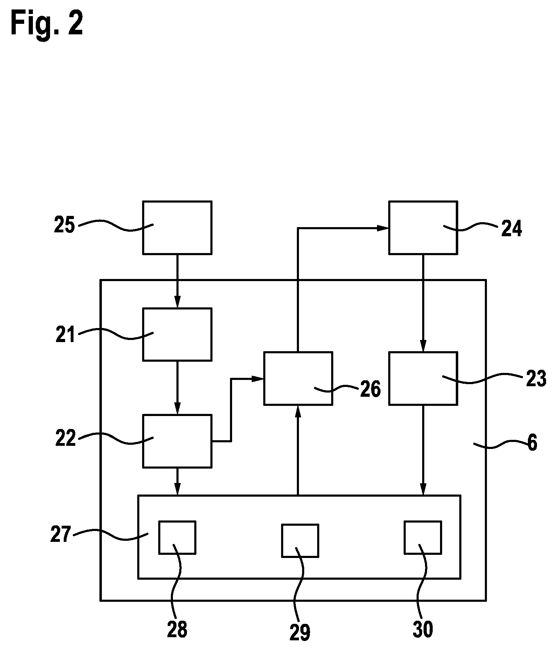

Mit Bezug auf Figur 2 wird die Datenverarbeitungseinrichtung 6 näher beschrieben. Sie umfasst ein Bildverarbeitungsmodul 21 und ein Objekterkennungsmodul 22, welche digitale Bilddaten eines optischen Sensorsystems 25 empfangen. Ein Ultraschallsignalverarbeitungsmodul 23 empfängt Daten eines Ultraschallsystems 24. Erfindungsgemäß weist die Datenverarbeitungseinrichtung 6 außerdem ein Steuerungsmodul 26 für das Ultraschallsystem 24, beispielsweise für die in Figur 1 dargestellten Ultraschallsensoren 2a, 2b, 2c, 2d auf. Das Steuerungsmodul 26 für das Ultraschallsystem 24 kann die Ultraschallsensoren 2a, 2b, 2c, 2d einzeln oder gemeinsam ansteuern.

Das Steuerungsmodul 26 für das Ultraschallsystem 24 empfängt Daten vom Objekterkennungsmodul 22 und/oder Daten von einem Modul 27, welches diese Daten weiterverarbeitet. Hierdurch kann ein von den Videokomponenten 25, 21, 22 oder ein von den Ultraschallkomponenten 24, 23, 27 erkanntes Objekt gezielt erfasst werden.

Die Datenverarbeitungseinrichtung 6 kann ein als ein Teil des weiterverarbeitenden Moduls 27 dargestelltes Datenfusionsmodul 28 umfassen, in dem die Daten des Bildverarbeitungsmoduls 21 und die Daten des Ultraschallsignalverarbeitungsmoduls 23 zusammengeführt werden. Weiterhin kann die Datenverarbeitungseinrichtung 6 ein als ein Teil des weiterverarbeitenden Moduls 27 dargestelltes Ausgabemodul 29 aufweisen, beispielsweise ein HMI (human machine interface) und ein als ein Teil des weiterverarbeitenden Moduls 27 dargestelltes Steuerungsmodul 30, welches in Antriebsstränge des Fahrzeugs 1 eingreifen kann.

In Fig. 3 ist ein aufgenommenes Bild 31 der Kamera 3 aus Fig. 1 dargestellt mit dem darin sichtbaren Hindernis 5. Das Hindernis 5 ist rechtsseitig von der Mitte 32 im Kamerabild 31 angeordnet. Das Kamerabild 31 ist hier beispielsweise in vier Bereiche 11 a, 11 b, 11 c, 11 d unterteilt, welche den vier Ultraschallsensoren 2a, 2b, 2c, 2d aus Fig. 1 entsprechen. Das Objekterkennungsmodul 23 weist dem erkannten Objekt 5 die Bereiche zu, in welchen sich das Objekt 5 befindet, hier die beiden rechtsseitigen Bereiche 11 c und 11 d.

Das Objekterkennungsmodul 22 übergibt dem Steuerungsmodul 26 für die Ultraschallsensoren 2a, 2b, 2c, 2d die Bereiche, in welchen das Objekt 5 detektiert wurde. Daraufhin steuert das Steuerungsmodul 26 für die Ultraschallsensoren 2a, 2b, 2c, 2d diejenigen Ultraschallsensoren 2a, 2b, 2c, 2d, welche den Bereichen entsprechen, gezielt an. Dabei übergibt das Objekterkennungsmodul 22 dem Steuerungsmodul 26 für die Ultraschallsensoren 2a, 2b, 2c, 2d außerdem eine Klassifizierung des Objekts 5, beispielsweise ob es sich um ein bewegliches Objekt oder ein unbewegliches Objekt handelt, so dass das Steuerungsmodul 26 für die Ultraschallsensoren 2a, 2b, 2c, 2d die Ultraschallsensoren mit einer besonderen Update-Rate ansteuern kann, welche der Objektklasse zugeordnet sein kann.

## Patentansprüche

1. Verfahren zum Erfassen einer Fahrzeugumgebung, wobei ein Sensor (2a, 2b, 2c, 2d, 3, 24, 25) eine Umgebung des Fahrzeugs (1) erfasst, in der erfassten Umgebung ein Objekt (5) erkannt wird, **dadurch gekennzeichnet, dass** aufgrund des erkannten Objekts (5) ein Ultraschallsystem (24) angesteuert wird, um das erkannte Objekt (5) zu erfassen, wobei die erfasste Umgebung des Sensors (2a, 2b, 2c, 2d, 3, 24, 25) lateral in Bereiche (11 a, 11 b, 11 c, 11 d) segmentiert ist, welche einem Ultraschallsensor (2a, 2b, 2c, 2d) und/oder mehreren Ultraschallsensoren (2a, 2b, 2c, 2d) zugeordnet sind, wobei dem erkannten Objekt (5) die Bereiche zugewiesen werden, in welchen sich das Objekt befindet, und diejenigen Ultraschallsensoren (2a, 2b, 2c, 2d) angesteuert werden, welche den Bereichen entsprechen.

2. Verfahren nach Anspruch 1, **dadurch gekennzeichnet, dass** der Sensor ein optischer Sensor (3, 25) ist, welcher ein Bild (31) einer Umgebung des Fahrzeugs (1) erfasst.

3. Verfahren nach Anspruch 1 oder 2, **dadurch gekennzeichnet, dass** ausgehend von Daten über das erkannte Objekt (5) dem Ultraschallsystem (24) ein Bereich erhöhten Interesses (11c, 11 d) übergeben wird, welcher von dem Ultraschallsystem (24) erfasst wird.

4. Verfahren nach Anspruch 3, **dadurch gekennzeichnet, dass** das Ultraschallsystem (24) abwechselnd eine vollständige Umgebungserfassung und die Erfassung des Bereichs erhöhten Interesses (11c, 11d) ausführt.

5. Verfahren nach Anspruch 3, **dadurch gekennzeichnet, dass** das Ultraschallsystem (24) eine vollständige Umgebungserfassung unterbricht, um den Bereich erhöhten Interesses (11 c, 11 d) zu erfassen.

6. Verfahren nach einem der Ansprüche 4 bis 5, **dadurch gekennzeichnet, dass** bei der Erfassung des Bereichs erhöhten Interesses (11c, 11 d) eine Update-Rate des Ultraschallsystems (24) höher ist als bei der vollständigen Umgebungserfassung.

7. Verfahren nach einem der vorhergehenden Ansprüche, **dadurch gekennzeichnet, dass** das erkannte Objekt (5) klassifiziert wird und dem Ultraschallsystem (24) ein Klassifikationsparameter übergeben wird.

8. Verfahren nach einem der vorhergehenden Ansprüche 2 bis 7, **dadurch gekennzeichnet, dass** das Bild (31) des optischen Sensors (3, 25) lateral in Bereiche (11a, 11 b, 11 c, 11 d) segmentiert ist, welche einem Ultraschallsensor (2a, 2b, 2c, 2d) und/oder mehreren Ultraschallsensoren (2a, 2b, 2c, 2d) zugeordnet sind.

9. Computerprogramm zur Durchführung eines der Verfahren nach einem der Ansprüche 1 bis 8, wenn das Computerprogramm auf einer programmierbaren Computereinrichtung ausgeführt wird.

10. Fahrerassistenzsystem zur Ausführung des Verfahrens nach einem der Ansprüche 1 bis 8, aufweisend
einen Sensor (2a, 2b, 2c, 2d, 3, 24, 25) zur Aufnahme einer Fahrzeugumgebung,
eine Komponente (22) zur Erkennung von Objekten in der erfassten Umgebung,
ein Ultraschallsystem (24) zum Erfassen einer Umgebung eines Fahrzeugs (1) und
eine Komponente (26) zur Ansteuerung des Ultraschallsystems (24) abhängig von Daten der Komponente (22) zur Erkennung von Objekten in der von dem Sensor (2a, 2b, 2c, 2d, 3, 24, 25) erfassten Umgebung.

## Claims

1. Method for sensing a vehicle environment, a sensor (2a, 2b, 2c, 2d, 3, 24, 25) sensing an environment of the vehicle (1), and an object (5) being detected in the sensed environment, **characterized in that** an ultrasonic system (24) is actuated on the basis of the detected object (5) in order to sense the detected object (5), the environment sensed by the sensor (2a, 2b, 2c, 2d, 3, 24, 25) being laterally segmented into regions (11a, 11b, 11c, 11d) which are assigned to one ultrasonic sensor (2a, 2b, 2c, 2d) and/or to a plurality of ultrasonic sensors (2a, 2b, 2c, 2d), the regions in which the object is situated being allocated to the detected object (5), and those ultrasonic sensors (2a, 2b, 2c, 2d) which correspond to the regions being actuated.

2. Method according to Claim 1, **characterized in that** the sensor is an optical sensor (3, 25) which captures an image (31) of an environment of the vehicle (1).

3. Method according to Claim 1 or 2, **characterized in that**, on the basis of data relating to the detected object (5), a region of increased interest (11c, 11d) is passed to the ultrasonic system (24) and is sensed by the ultrasonic system (24).

4. Method according to Claim 3, **characterized in that** the ultrasonic system (24) alternately carries out complete environment sensing and the sensing of the region of increased interest (11c, 11d).

5. Method according to Claim 3, **characterized in that** the ultrasonic system (24) interrupts complete environment sensing in order to sense the region of increased interest (11c, 11d).

6. Method according to either of Claims 4 and 5, **characterized in that** an update rate of the ultrasonic system (24) is higher when sensing the region of increased interest (11c, 11d) than during complete environment sensing.

7. Method according to one of the preceding claims, **characterized in that** the detected object (5) is classified and a classification parameter is passed to the ultrasonic system (24).

8. Method according to one of the preceding Claims 2 to 7, **characterized in that** the image (31) from the optical sensor (3, 25) is laterally segmented into regions (11a, 11b, 11c, 11d) which are assigned to one ultrasonic sensor (2a, 2b, 2c, 2d) and/or to a plurality of ultrasonic sensors (2a, 2b, 2c, 2d).

9. Computer program for carrying out one of the methods according to one of Claims 1 to 8 when the computer program is executed on a programmable computer device.

10. Driver assistance system for carrying out the method according to one of Claims 1 to 8, having
a sensor (2a, 2b, 2c, 2d, 3, 24, 25) for recording a vehicle environment,
a component (22) for detecting objects in the sensed environment,
an ultrasonic system (24) for sensing an environment of a vehicle (1), and
a component (26) for actuating the ultrasonic system (24) on the basis of data from the component (22) for detecting objects in the environment sensed by the sensor (2a, 2b, 2c, 2d, 3, 24, 25).

## Revendications

1. Procédé pour détecter un environnement de véhicule, un capteur (2a, 2b, 2c, 2d, 3, 24, 25) détectant l'environnement du véhicule (1), un objet (5) étant reconnu dans l'environnement détecté, **caractérisé en ce qu'**un système à ultrasons (24) est commandé en se basant sur l'objet (5) reconnu afin de détecter l'objet (5) reconnu, l'environnement détecté du capteur (2a, 2b, 2c, 2d, 3, 24, 25) étant segmenté latéralement en zones (11a, 11b, 11c, 11d) qui sont associées à un capteur à ultrasons (2a, 2b, 2c, 2d) et/ou à plusieurs capteurs à ultrasons (2a, 2b, 2c, 2d), des zones dans lesquelles se trouve l'objet étant associées à l'objet (5) reconnu, et les capteurs à ultrasons (2a, 2b, 2c, 2d) qui sont commandés sont ceux qui correspondent aux zones.

2. Procédé selon la revendication 1, **caractérisé en ce que** le capteur est un capteur optique (3, 25) qui détecte une image (31) d'un environnement du véhicule (1).

3. Procédé selon la revendication 1 ou 2, **caractérisé en ce qu'**une zone d'intérêt accru (11c, 11d), laquelle est détectée par le système à ultrasons (24), est délivrée au système à ultrasons (24) en fonction des données relatives à l'objet (5) reconnu.

4. Procédé selon la revendication 3, **caractérisé en ce que** le système à ultrasons (24) effectue en alternance une détection complète de l'environnement et la détection de la zone d'intérêt accru (11c, 11d).

5. Procédé selon la revendication 3, **caractérisé en ce que** le système à ultrasons (24) interrompt une détection complète de l'environnement afin de détecter la zone d'intérêt accru (11c, 11d).

6. Procédé selon l'une des revendications 4 à 5, **caractérisé en ce que** lors de la détection de la zone d'intérêt accru (11c, 11d), une fréquence de mise à jour du système à ultrasons (24) est supérieure à celle qui a lieu lors de la détection complète de l'environnement.

7. Procédé selon l'une des revendications précédentes, **caractérisé en ce que** l'objet (5) reconnu est classifié et un paramètre de classification est délivré au système à ultrasons (24).

8. Procédé selon l'une des revendications précédentes 2 à 7, **caractérisé en ce que** l'image (31) du capteur optique (3, 25) est segmentée latéralement en zones (11a, 11b, 11c, 11d) qui sont associées à un capteur à ultrasons (2a, 2b, 2c, 2d) et/ou à plusieurs capteurs à ultrasons (2a, 2b, 2c, 2d).

9. Programme informatique destiné à mettre en oeuvre le procédé selon l'une des revendications 1 à 8 lorsque le programme informatique est exécuté sur un appareil informatique programmable.

10. Système d'assistance au conducteur destiné à mettre en oeuvre le procédé selon l'une des revendications 1 à 8, comprenant
un capteur (2a, 2b, 2c, 2d, 3, 24, 25) destiné à détecter un environnement de véhicule,
un composant (22) destiné à reconnaître des objets dans l'environnement détecté,
un système à ultrasons (24) destiné à détecter un environnement d'un véhicule (1) et
un composant (26) destiné à commander le système à ultrasons (24) en fonction des données du composant (22) destiné à reconnaître des objets dans l'environnement détecté par le capteur (2a, 2b, 2c, 2d, 3, 24, 25).
